# EUROPEAN PATENT SPECIFICATION

(11) **EP 3 433 791 B1**
(45) Date of publication and mention of the grant of the patent: **12.01.2022**
(21) Application number: 17771273.4
(22) Date of filing: 24.03.2017
(51) Int. Cl.: H04W 4/70, H04W 12/00, H04W 12/04, H04W 12/069, H04W 12/55, G06F 21/44, G06F 21/33, H04L 29/06, H04L 29/08

(54) **SYSTEM AND METHOD FOR INTERNET OF THINGS (IOT) SECURITY AND MANAGEMENT**
SYSTEM UND VERFAHREN FÜR SICHERHEIT UND VERWALTUNG VON INTERNET DER DINGE (IOT)
SYSTÈME ET PROCÉDÉ DE GESTION ET DE SÉCURITÉ DE L'INTERNET DES OBJETS (IDO)

(30) Priority: 25.03.2016 US 201662313124 P; 24.04.2016 US 201662326812 P; 02.05.2016 US 201662330839 P; 09.06.2016 US 201662347822 P; 01.08.2016 US 201662369722 P; 11.08.2016 US 201662373769 P; 28.09.2016 US 201662401150 P
(43) Date of publication of application: 30.01.2019
(73) Proprietor: T-Central, Inc., Dover, DE 19901 (US)
(72) Inventor: KRAVITZ, David W., San Jose, CA 95123 (US); GRAHAM, Donald Houston III, Los Angeles, CA 90027 (US); BOUDETT, Josselyn L., Clearwater, FL 33755 (US); DIETZ, Russell S., San Ramon, CA 94583 (US)
(74) Representative: Dolleymores
(86) International application number: PCT/US2017/024112
(87) International publication number: WO 2017/165828

(56) References cited:
- US-A1- 2007 050 618
- US-A1- 2014 241 354
- US-A1- 2015 222 621
- US-A1- 2015 334 554
- US-B1- 9 094 407
- US-B2- 8 656 484

## Description

### FIELD OF THE INVENTION

The present invention relates generally to Internet of Things (loT) Security and Management and more specifically to system and method for loT security and management.

### BACKGROUND

Many businesses, organizations, governments and others that are responsible for the security, operations, support and maintenance of Internet of Things (IoT) devices are increasing confronting challenges. IoT devices are increasingly performing important roles in many areas of a modern economy, including facilities for manufacturing, utilities, distribution, recreation, military, residential, commercial, healthcare and others. In addition, IoT devices are incorporated into manufactured products that may or may not be associated with the above facilities such as, automobiles, aircraft, medical devices, etc. For such product manufactures, protecting, controlling and managing the IoT devices (which are typically manufactured by third-parties) can be challenging, fraught with danger, risk or potential liability. It is desirable for both manufactured products (together with their incorporated IoT devices) as well as for enterprises deploying IoT devices in their operating facilities (e.g., a factory, utility grid, etc.) to ensure control over the data that is produced, exert access control so that unauthorized, random parties cannot get access to the device, have the ability to instruct a device(s) to only listen to authorized parties, have the ability for a device(s) to ignore unauthorized parties, and/or to provide strong identity management for typical IoT device(s) and devices that may be within such operating IoT devices to external, authorized systems or entities. It is also desirable for typical devices to be configurable and easily updatable only with authorized, verified firmware.

US2014/24135A1 discloses a method for establishing a secure communication between a plurality of Internet of Things (IoT) devices.

### SUMMARY

In some embodiments, the disclosed invention is a method for establishing a secure communication between a plurality of loT devices, the method including: provisioning a first and a second loT devices by providing a unique identification, a digital identity token and a cryptographic key to and issuing a first digital certificate to each of the first and second loT devices; inviting the second loT device by the first loT device to establish a communication line with the first loT device by receiving a digital token from the second loT device, authenticating the second loT device using the unique identification, the digital identity token and the cryptographic key of the second loT device; establishing a secure communication line between the first loT device and the second loT device by authenticating the established communication line and issuing a second digital certificate to the communication line between the first loT device and the second loT device; and preventing a third loT device for which a secure communication line to the first or second loT device has not been established from communicating with the first or second loT device.

In some embodiments, the disclosed invention is a system for establishing a secure communication between a plurality of loT devices. The system includes: a first loT device including a first unique identification, a first digital identity token and a first cryptographic key; a second loT device including a second unique identification, a second digital identity token and a second cryptographic key to establish a communication line with the first loT device by receiving a digital token from the first loT device, authenticating the first loT device using the first unique identification, the first digital identity token and the first cryptographic key of the first loT device; and an attribute authority (AA) for providing a first digital certificate to the first loT and second devices, establishing a secure communication line between the first loT device and the second loT device by authenticating an established communication line between the first loT device and the second loT device, wherein a third loT device for which a secure communication line to the first or second loT device has not been established is prevented from communicating with the first or second loT device.

In some embodiments, the method and system may include a digital agreement establishing terms of use of the secure communication line between the first and second loT devices.

### BRIEF DESCRIPTION OF THE DRAWINGS

These and other features, aspects, and advantages of the present invention will become better understood with regard to the following description, appended claims, and accompanying drawings.
FIG. 1 shows a security system for performing an exemplary provisioning process for a loT device, according to some embodiments of the disclosed invention.
FIG. 2 depicts a security system for inviting an loT device to mutually establish a secure communication line, according to some embodiments of the disclosed invention.
FIG. 3 illustrates a security system for establishing secure communication lines between multiple pairs of loT devices in a vehicle, according to some embodiments of the disclosed invention.
FIG. 4 shows a security system for authenticating a new product including loT devices, according to some embodiments of the disclosed invention.
FIG. 5 shows a security system for maintenance of a product including loT devices and their possible replacement, according to some embodiments of the disclosed invention.
FIG. 6 depicts some elements of a secure and authenticated communication line, according to some embodiments of the disclosed invention.
FIG. 7 illustrates some elements of a security ecosystem, according to some embodiments of the disclosed invention. no others.
FIG. 8 shows an exemplary use of two application programming interfaces (APIs), according to some embodiments of the disclosed invention.
FIG. 9 is an exemplary process flow for establishing a secure communication between a plurality of IoT devices, according to some embodiments of the disclosed invention.

### DETAILED DESCRIPTION

In some embodiments, the security ecosystem of the disclosed invention provides many of the above mentioned capabilities through the use of a central server configured with one or more of an attribute authority (AA) acting as a trusted third party mediating service provider by using one or more of a public key infrastructure (PKI), including one or more of a certification authority, registration authority, hardware security module (HSM), validation authority (VA, possibly by online certificate status protocol, OCSP, or certificate revocation list, CRL), a privilege management infrastructure (PMI), virtual network protocol (VPN) technology, device-side client applications, cloud hosting, authentication and light active directory access protocol (LADP). In some embodiments, the security ecosystem of the disclosed invention may also provide specifications to third-party loT device manufacturers (whose loT products may later be managed by the security ecosystem) combined possibly with other solutions. Current typical industry practice is to only issue a certificate to each endpoint from a central certification authority (CA). However, the security ecosystem of the disclosed invention not only issues certificates to endpoints, but it also issues certificates to each authenticated communication line 705 that pairs of endpoints may establish (have established) and use.

In some embodiments, this security ecosystem may result in real time management of credentials, identity profiles, communication lines, and/or keys. It is capable of distributing tunable rights to authorized users/devices. Using a security ecosystem's user-managed, device-managed, operator-managed, or artificial intelligence-managed inviter-invitee protocol suite, inviters may vouch for the identity of the invitees who may successfully complete the protocol establishing secure communication lines, for example, with identity support information supplied by the security ecosystem. Users/devices may establish and respond to authorization requests and other real-time verifications pertaining to accessing a typical communication line (not an endpoint), which may share encrypted communications.

Typically, a communication line may be accompanied by a digital agreement establishing terms (e.g., rules and/or business logic) of the use of the communication line between the endpoints. These agreement are generally auditable, brokered, trusted-relationships where such relationships/digital agreements may each stand-alone (generally for privacy) or may leverage the buildup of identity confidence levels across relationships. These relationships may be organized into defined "groups". In some embodiments, a cryptographically-secured group may include all or one or more subset group of the devices incorporated within a single manufactured product, for example, in different embodiments, a group may encompass endpoint loT devices within an automobile, aircraft, medical device, household appliance and the like.

According to some embodiments of the disclosed invention, individually manufactured loT devices as well as manufactured products (which incorporate loT devices) include one of more of the following capabilities. They ensure control over data that is produced, which may include protection of data (e.g., using encryption) and possibly movement of the data; exert access control so that unauthorized, random parties cannot get access to the devices; have the ability to instruct the device to listen only to authorized parties so that man-in-the-middle attacks can be prevented or mitigated. These devices may also provide strong identity management, not only for multiple loT devices that may be within the product, but also from the product to external, authorized systems or devices.

Many devices may be configurable and easily updatable only with authorized, signed firmware code that is signed using a private key that corresponds to a subject public key within typically a code signing certificate issued by a certification authority recognized by a host computer or device. One example of a manufactured product that may benefit from the solution described herein is an automobile. There have been a number of reports of automobiles having been remotely hacked. Once having access to the system, the hacker was able to use the automobile's controller area network (CAN) bus to access and take at least partial control over multiple electronic control units (ECUs): such as engine, brake, speed, steering, and/or others. The disclosed invention may be applicable to a variety of ECUs such as human machine interface, engine control unit, transmission control unit, steering control unit, telematics control unit, speed control unit, battery management system, seat and door control units, and the like.

In some embodiments, the disclosed invention leverages the unique properties of a secure component or a physically unclonable function (PUF), and provides one or more of: a foundation for reliably establishing the identity of an loT device, solves gaps of traditional firewall security, authenticates remote identities, exchanges authenticated public keys, prevents random device access, protects and controls data, and/or updates devices with signed firmware.

In some embodiments, the devices incorporating the disclosed invention are capable to control and use protected cryptographic keys. In some embodiments, multiple IoT devices may be used together in a coordinated manner or in an assembled product in order deliver a complex or integrated solution that could otherwise require specialized skill sets, by integrating IoT devices (which incorporate cryptographic and security capabilities according to the disclosed invention) into an assembled product.

For the purposes of the system of the disclosed invention, IoT devices are endpoints and are generally composed of two broad types as follows.

"Control IoT" or "CIoT" devices are the type of client IoT devices that may also be used to control or manage one or more similar IoT devices or IoT devices of a more limited nature. For example, CIoT devices could include an ECU in an automobile.

A "Limited loT" or "LloT" device typically does not include the processing or memory capacity or other capabilities of a typical CloT devices (with greater memory, processing power, etc.). LloT devices could include sensors, switches, actuators, controllers, and the like.

Considering the limited processing and other capabilities of a LloT device, all or portions of the ecosystem system's complete inviter-invitee provisioning protocol may be installed into the device in a partially pre-completed state during its manufacturing process. Also, pre-assigned on such a LloT device may be a unique protocol address or identifier assigned to the device and keys for one or more trusted CloT devices or other trusted devices within the security ecosystem. For example, public keys could be provided to designate to LloT devices when those public keys are associated with devices or endpoints that the LloT device is to trust. These would be devices that might offer trusted services to the LloT device, such as a firmware-signing authority, administer/user-controlled device, trusted management device (e.g. a CloT), Trusted Group devices or others. Throughout this disclosure, the terms "loT device" or "loT endpoint" may be used to refer to either a CloT or LloT device. The terms "device" or "endpoint" may refer to an "loT device", "loT endpoint", user/endpoint, CIoT, LIoT device, "container" or user-controlled device such a mobile device, computing device, etc.

Typically, assignments of limited Iot (LIoT) devices may be reported to, managed or controlled by a control IoT (CIoT) device. Based on the information described above being collected and certified by a CloT device, an AA could create a digital certificate for each LloT device with the collected, verified information. For example, such a digital certificate could include a device's unique identifying information, its device type and capabilities. It may also include the LloT device's relationship to a CloT device(s), address, installed location, inviter-invitee provisioning process relationships, group membership, manufacture's certification and other information as appropriate. Such certificates may be automatically and continuously updated and maintained throughout the life cycle of the product.

The security ecosystem of the disclosed invention allows for multiple methods of provisioning the device to achieve an endpoint unique identity for the device. In some embodiments, an loT device manufacturer's specification may be created by which manufactures of loT devices or products incorporate loT devices (such as: televisions; refrigerators; security systems; thermostats; and the like) to incorporate the technology into their devices at the time of manufacture. In some embodiments, this technology may be in the form of fully custom digital logic, IP logic blocks incorporated into the device's existing digital logic, programmable logic implemented using FPGA technology built into the device, fully custom firmware included with the device's own custom firmware, or an open-source or proprietary firmware stack added to the device's firmware. For devices with updateable programmable logic resources and/or firmware, this technology could also be embodied in the device after the time of manufacture Some embodiments of conformance with the specification would be for the firmware of the loT device to support a device's adherence to any rules included in the digital agreement that is typically recorded in a digital certificate attesting to a communication line between that endpoint device and another endpoint and establishing terms (e.g., rules and/or business logic) of the use of the communication line established between the endpoints. Such specification may also require that loT devices only communicate to previously authenticated endpoints and no others. An loT device endpoint may have communication lines typically established between it and one or more other endpoints, typically a device with which it needs to communicate in order to meet operational or other needs.

The rules, procedures, policies described herein may be incorporated in a written specification to be provided to a manufacturer of an loT device, as well as possibly the various supply chain suppliers to that manufacturer (e.g., chip, field programmable gate arrays (FPGA) or others) in order for them to design, produce, manufacture, assemble or otherwise contribute to the creation of loT devices that integrate with the security ecosystem. Included in such a spec may be methods for the security ecosystem to manage secure firmware updates of all managed loT devices.

Specification-conforming device firmware of such an loT device endpoint would reject or ignore communication from any unknown endpoint that has not previously been authenticated through the establishment of a secure communication line, and would talk only to previously authenticated endpoints with established communication lines and supported by digital certificates. Device firmware may initially conform with the specification or may be brought into conformance with the specification by way of a firmware update at a later time. An loT device can be made in conformance with the spec or as a more basic device onto which the device's owner (e.g., owner, manufacturer, or others who desire to increase the security and manageability of the loT devices that they may own or control) could install an appropriate application that would cause such device to perform as an loT device in general conformance with the spec and described functionality of the security ecosystem.

By applying principles and procedures similar to those described for a manufacturer of products (that incorporate loT devices) and making use of the capabilities of the security ecosystem, an owner could enhance the security of such acquired or controlled loT devices, as well as enhance the owner's management and control over such owned or controlled loT devices, as well as possibly obtain other of the capabilities, features and/or benefits described in this application. Moreover, all or portions of the provisioning steps may be done by an loT device manufacturer, and/or all or portions may be done by (or on behalf of) a device customer.

In some embodiments, an loT device manufacturer may be provided with comprehensive installation support procedures as well as configuration options to utilize to optimize both their manufacturing process and operational performance. Within the security ecosystem environment, an loT device can be assigned a unique address, for example an internet protocol (IP) address or other identifier, as a step in its manufacturing process or, if desired, when the device is put into service. The address can be securely stored on the loT device in a re-writable memory facility or in a permanent fashion in a secure component. The security ecosystem device manufacturing specification may require the device address to be visible on the device itself via alpha/numeric or QR code, or both.

The specification allows a device to optionally be programmed such that when the device powers up, it broadcasts a confirmation message, such as a "Hello" message with its address, together with other identifying information such as its model number, serial number, public keys, current white list, current firmware version, etc. One example of the use of this feature is during the period when components are being installed in automobiles at a manufacturing facility. At any time during testing, assembly, installation, quality inspections, etc. a technician may power and test devices, thereby capturing a device's unique "hello" message that comprehensively identifies that device. This feature could be useful to catalogue and assign a specific device a designation associated with an installation location in an automobile (This messages may later be disabled).

In some embodiments, an unalterable manufacturer certification prior to loT device delivery may be included in the specification for loT device manufactures. Such non-refutable certification can be in one of multiple acceptable forms such as a PKI certificate or other a digital token stored in a secure component, or a physical data record on the device that is locally or remotely readable. At the time of manufacture of loT devices intended for incorporation into the security ecosystem of the disclosed invention, the manufacturer may be asked to certify one or more of the following: (a) all communication leaving or being received by the device may be controlled by a specified application running on the loT device (e.g., that the device firmware recognizes and supports the secure communication lines technology of the security ecosystem), (b) all or designated communications leaving or being received by the device may only be sent to IP addresses on an updatable white list and/or addresses associated with entities authenticated through an inviter-invitee protocol and/or otherwise provided to the device by an authorized endpoint, (c) additional conditions as may be deemed appropriate, and (d) that no manufacturer certification is made.

In some embodiments, in the case of some loT devices a unique identifier or cryptographic key may be pre-installed during the manufacturing process of the device, or in some cases injected after the manufacturing of the device. In some embodiments, a trusted platform module (TPM) or physically unclonable function (PUF) may be used to provide a unique identity or cryptographic key on the device. With PUF technology, security keys and unique identifiers can be extracted from the innate characteristics of a semiconductor within a device. These unique keys are typically only generated when required and typically don't remain stored on the system, hence providing a high level of protection. The unique key generated with PUF technology allows for the bootstrapping of a cryptographic system (such as what is needed within the loT/endpoint client of the security ecosystem) to establish a root key. In some embodiments, the cryptographic algorithms and/or keys are protected or separated from the application software/firmware in some security subsystem inside the device.

In some embodiments, the security ecosystem loT device client application may be installed onto a Field Programmable Gate Array (FPGA), other types of integrated circuits (ICs). For example, an FPGA, a controller or microprocessor may be provisioned with an loT device client which may include one or more of a local key store module (LKSM), a security ecosystem assigned globally unique identifier (GUID) assigned to the device, public keys that are associated with devices, and endpoints that the loT device is to trust (e.g., a firmware-signing authority, loT management device; loT support group; etc.). The LKSM typically includes the encryption management system (e.g., it may provide symmetric, asymmetric, elliptic curve, and/or cryptographic functionality) in the device that manages, for example: (a) a key pair for signature generation and signature verification, (b) key pair(s) for encryption and decryption, (c) symmetric key for verifying integrity of data, (d) cryptographic wrapping/unwrapping of digital asset-specific keys (that were initially generated potentially by a device client or cryptography microprocessor or potentially by a security ecosystem server or other), some of which may be installed in a secure component.

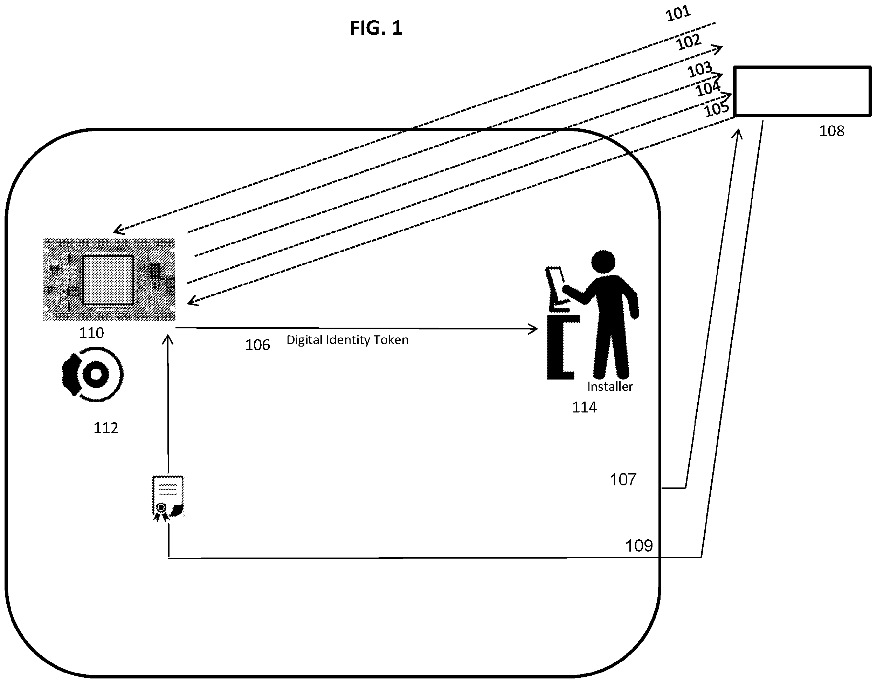

FIG. 1 shows an exemplary provisioning process for an loT device, according to some embodiments of the disclosed invention. Typically an installer with a computing device 114 would oversee this process or by an loT device with internal intelligence or a computing device controlled by a program, such as an artificial intelligence program, may control the process. If the security ecosystem's client app has not been previously installed on the loT device, it is downloaded (101) from the installer's computing device (114) or from a security ecosystem platform 108. The security ecosystem platform 108 includes one or more of a PKI, PMI and AA and more. A unique GUID may be associated with the client instance during client installation that being registered with the security ecosystem in 102 (e.g., transferred via the installer's computing device 114). If not previously generated, a unique PUF-generated ID may be created on the device, in 103. The crypto capability on a processor within the device may create one or more public/private key pairs with at least one public key being transferred to the security ecosystem 108 directly or via the installer's computing device 114; also transferred may be device identifying information such as its model number, serial number, type name, current white list, current firmware version, etc. in 104.

A certificate is provided by the AA to the device attesting to the device's identity with one or more of the following: device client GUID, device ID, device public key, device public identity (e.g., type name, serial number, etc.), in 105. The device may create and sign a digital identity token (DIT as further described in the following section) asserting the device's identity, including one or more of: the device's specifications; identity; role or function; its public key; and possibly other information, in 106. This DIT can be presented to the installer computing device or possibly to the security ecosystem (or in other embodiments to an loT device with internal intelligence or to a computing device controlled by an artificial intelligence computer program), which reviews and confirms the device's assertions and, in turn possibly certifies its confirmation to the device's assertions thereafter digitally signing the device's digitally signed assertions and sending that to the security ecosystem, in 107. Optionally, the security ecosystem may review these assertions and may create an attribute certificate or DIT affirming them, in 108. The security ecosystem may provide public key certificates of other devices and/or groups that the loT device is to trust (e.g., firmware signing authority; automotive maintenance group as described in more detail later in this application) and to digitally sign them certifying that they are to be trusted, and then provide the public key certificates to the loT device, in 109 (possibly transferred via the installer's computing device 114). In some embodiments, a CloT device (as described herein) may be substituted for an installer's computing device in one or more of the above steps.

In some embodiments, loT device are provided with a DIT. Typically, DIT tokens may be created from within an existing loT device client thereby taking advantage of the digital signing capability of that loT device client. The token typically includes the digital signature of that issuing device. In step 107, the token may be created with a configurable variety of identifying fields. In the case of an loT device, these could include: device manufacturer, serial number, device type, device model, GUID, date of issuance, etc.

In some embodiments, secure boot and software attestation functions are provided to detect tampering with boot loaders and/or critical operating system files by checking their digital signatures and product keys. Invalid files are blocked from running before they might attack or infect the system or device, giving an loT device a trust foundation when operating. Additionally, a trusted execution technology using cryptographic (or other) techniques to create a unique identifier for a subject component, enabling an accurate comparison of the elements of a startup (or operating) environment against a known good source and arresting the launch of code that does not match (or sending an alert to an appropriate device or endpoint or the security ecosystem). In some embodiments, detection may be a digital fingerprint of the device firmware installation, such as a PUF. Such a fingerprint (or cryptographic hash or other derivative thereof) may be incorporated into a DIT or digitally signed and used as a separate verification. One or more of these components could be integrated in one or more separate processors. (See for example, FIG. 1, steps 105 and 109).

In some embodiments, the provisioning process would also include the addition to the LKSM or secure component or other acceptable storage of public keys associated with trusted users, devices, entities, etc. For example, one of the most important added public keys to be trusted would be from the security ecosystem and be the signer of the Public Key Certificates of all future trusted public keys to be used.

Trusted verification can be accomplished in a number of ways. In some embodiments for the assembly of an automobile, the security ecosystem issues a unique ID or pubic key certificate to be trusted, in the form of a digital certificate to the newly installed loT device firmware client of the brake control unit to which only that loT device client would have access (e.g., by using the public key of the loT device client of the brake control unit). The loT device client of the brake control unit could singularly decrypt that unique ID. The loT device then creates a digital signed token composed of that unique ID possibly encrypted using its private key and return it to the security ecosystem.

The security ecosystem verifies that the loT device client of the brake control unit provided an acceptable digital token confirming it uniquely has received the unique ID and /r public key certificate of devices to be trusted. The security ecosystem then creates a message confirming the correct key validation digitally signs it using the private key associated with the public to be trusted, and returns it to the loT device client of the Brake Control Unit. The veracity of the signed confirmation is verified using the public key to be trusted and the confirmation is complete. Thereafter, additional trusted keys may be added and other verified messages from the security ecosystem may verified through this or a similar digital signing capability. Examples of trusted entities whose trusted public keys could be added include: code signing authorities; a maintenance group; specified devices; etc.

In some embodiments, provisioned loT devices may be added through the use of an inviter-invitee Protocol for loT devices. The determination for specific relationships between designated loT devices may be made by a number of authorized entities such as: users; the security ecosystem; a master loT device management entity (e.g., a CloT device); an loT device with internal intelligence; an Artificial Intelligence (Al) system with access to the security ecosystem (e.g., the PKI/PMI and/or to the Attribute Authority) and directing the actions of the security ecosystem; etc. One or more of these may utilize the security ecosystem to instruct a designated loT device to establish a secure communication line with one or more other designated loT devices, including the establishment of rules and/or business logic (or possibly limited to the modification of existing rules and/or business logic). A proper instruction typically will include appropriate identification of both inviter and invitee devices, together with digitally signed authorization for such requests.

To facilitate authentication in the inviter-invitee process, the AA of the security ecosystem may provide to either or both of the inviter-invitee a question and/or the answer to that question to be used during the inviter-invitee protocol. Through such a security ecosystem directed or approved process, devices (possibly through the added use of an artificial intelligence capability or by an loT device with internal intelligence) may be capable of executing such instructions with or without the need direct human intervention or action and establish secure communication lines between them with the support of a trusted third party AA. In some embodiments, the inviter-invitee process is controlled or managed by a human installer or by an automated process. Successful execution of the inviter-invitee protocol for loT devices results in the establishment of the desired communication line and an attribute certificate with a digital agreement (as described herein) being created and recorded by the security ecosystem's AA, which is X.509 compliant in some embodiments.

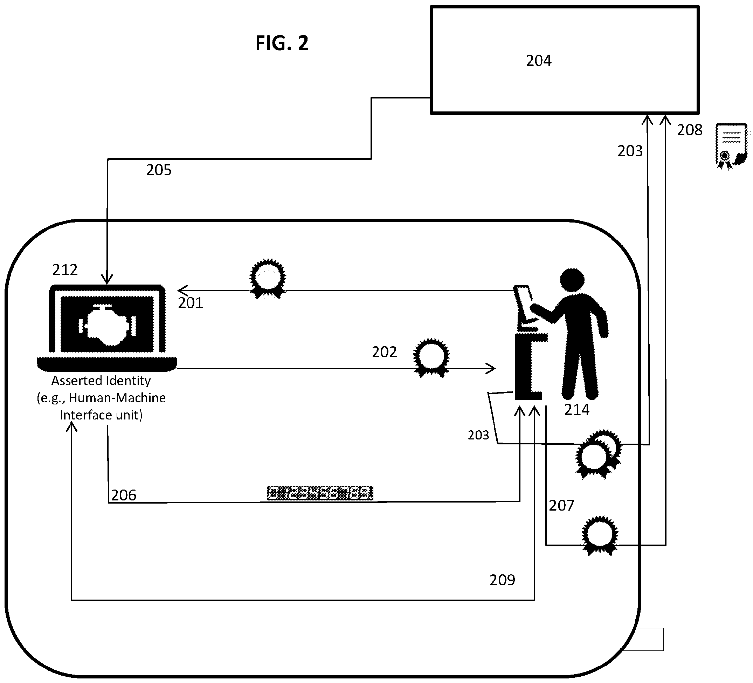

FIG. 2 depicts a security system for inviting an loT device to mutually establish a secure communication line, according to some embodiments of the disclosed invention. This figure illustrates an automotive use case example of a security ecosystem user/endpoint (e.g., a system or device installer 214) wishing to invite a human machine interface unit 212 to join security ecosystem 204 and the systems installer wishes to be able to know, with certainty, that the loT device client subsequently identified as belonging to the identified human machine interface unit was installed and is controlled for this specific human machine interface unit and has not been co-opted by a fraudster. The security ecosystem platform 204 includes one or more of a PKI, PMI and AA and others. Also the installer 214 may want to know that this human machine interface unit loT device client is the only one on the security ecosystem network. Through a process of chain of custody of digital records to and from that loT device, client may be certified by the security ecosystem.

When a new user/device (in this exemplary case the human machine interface unit 212) is invited (201) and goes through the loT device client installation process, it may be asked whether it has a digital identity token. If so, the loT device client loads the digital identity token shown by 202. The installer 214 may provide its certification to the DIT and transmit it to the security ecosystem, in 203. The security ecosystem network may then examine the token for authenticity, shown by 204. Each token is unique and may only be installed for a single security ecosystem user. In some embodiments, an additional out-of-band confirmation of successful installation is included for that loT device client. An example of out-of-band confirmation may be included in the verification process whereby the security ecosystem 204 issues a unique ID (which may be encrypted using the public key of the human machine interface unit) to the newly installed loT device client of the human machine interface unit to which only it would have access, shown by 205. loT device client of the human machine interface unit 212 would then provide that unique ID (possibly digitally signed using its private key) to the confirming systems installer, in 206.

In some embodiments, the system's installer certifies to the security ecosystem 204 that he has personally confirmed with human machine interface unit 212 the completion of installation, and optionally includes such a unique ID with his certification to the security ecosystem, for example, through use of his own client application, in 207. Such a confirmation (particularly with the use of a one-time-only unique ID issued by the security ecosystem) would confirm the completion of a secure installation link and thereafter is able to support the future chain of custody of digital records sent between that loT device client and other verified security ecosystem loT device clients, as shown by 209. In some embodiments, the described inviter-invitee process generates audit trails based, in part, on digital signatures. Moreover, other actions and activities of the security ecosystem 204 may generate audit trails based, in part, on digital signatures.

The successful completion of the invitee processing may be understood to imply acceptance of any digital agreement(s) proffered by the inviter. This may involve use of a signature generation private key by the invitee's host computer/client/device that corresponds to a subject public key within a certificate that is referenced by a newly generated attribute certificate owned by the invitee. In some embodiments, an X.509 protocol Attribute Certificates (ACs) underlie inviter and invitee processing. As a result of the inviter-invitee processing, the security ecosystem 204 pairs, under mutual agreement, an enterprise-level managed identity with a unique communication line to each authenticated and authorized user/endpoints.

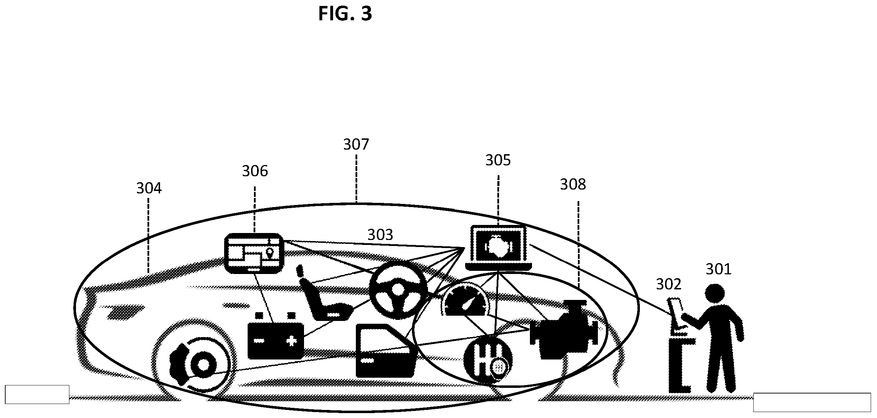

FIG. 3 illustrates a security system for establishing secure communication lines between multiple pairs of loT devices in a vehicle, according to some embodiments of the disclosed invention. Through the use of one or more methods of device provisioning and an inviter-invitee process, users/devices and/or the loT devices within a manufactured or assembled product are able to establish unique presence, authenticate and link respective identities with devices, and establish authenticated, verified and secure communication lines between each other. This may be done by devices or devices supervised by an installer 301 operating an end user device 302, multiple human-operated end user devices, or end user device(s), via a human machine interface control unit 305. These may optionally be used in the formation of relationships between devices 303 (e.g., a human-machine interface control unit 305 and a telematics control unit 306) that with the addition of other similarly paired devices may be organized into defined groups. For example, a cryptographically-secured group may include all of the devices together with their communication lines that may be incorporated within a single manufactured product, such as a vehicle 304, aircraft, medical device, etc. to establishing secured, protected and auditable communication to and from that group 307. One or more subgroups of devices may be formed within a group 308 or possibly in a combination of devices with a group and devices outside of the group. Further, the record of the group members, their information, communication lines between the members, group membership and/or other pertinent information may be established, recorded and/or revoked in a security ecosystem. Device group membership as well as rules associated with membership in that group may be included on a certificate that is added (directly or indirectly by an AA) to one or more communication lines of devices within that group.

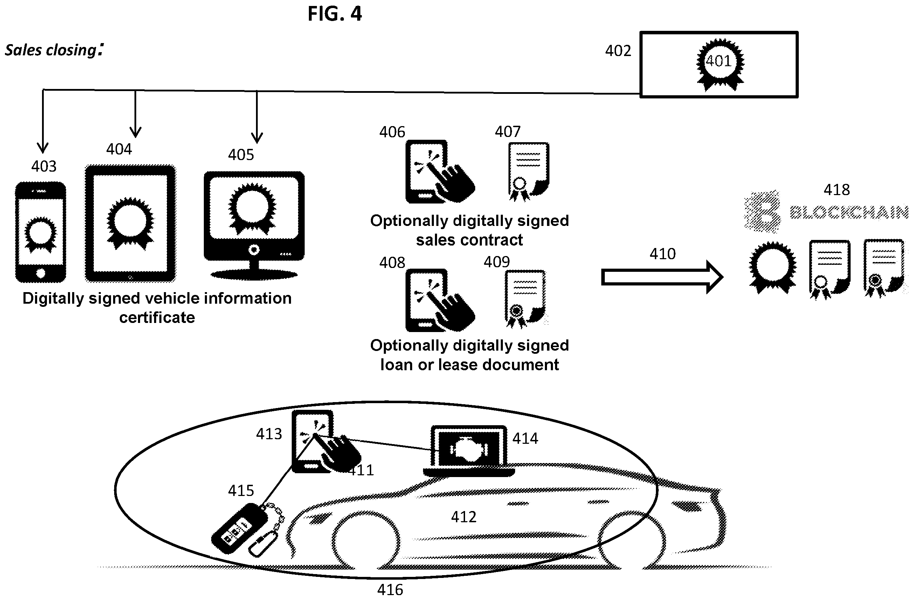

FIG. 4 shows a security system for authenticating a new product including loT devices, according to some embodiments of the disclosed invention. Manufactured products incorporating loT devices are typically sold or otherwise provided to buyers, lessees, or other end users. In some embodiments, such a product could be a car with a buyer 411 buying a car 412. In such a case a buyer's purchase is made more secure through the incorporation of a digital certificate 401 encompassing pertinent and authenticated information about the car, the loT devices associated with the car and other information. Such a digital certificate 401 could be delivered from a security ecosystem 402 to a buyer's mobile device 403, tablet device 404, computer 405 or other devices. The security ecosystem platform 402 includes one or more of a PKI, PMI and AA. The buyer 411 may execute his/her purchase contract, for example, with a digital signature using a security ecosystem supported mobile device 406 that has been authenticated through the security ecosystem. These digital records 407 may then be transferred to a lender or other interested parties and a lease or a loan agreement might also be digitally signed (408).

A record of the purchase combined with a digital record of the car (and possibly a lease or loan document (409)) is then recorded (by a lender, security ecosystem or other) in an immutable manner (410). One example of such a recording may be on a Blockchain^{™} or similar media 418, as shown by 410. The buyer 411 and car's relationship may also be authenticated with each other, with a buyer's client application on a buyer device 413, and with both the car (through one of its loT devices 414) and the car's passive key and entry system (key fob device) 415. The buyer's mobile device, the car and the passive key entry system will then all become members of an authenticated group, for example an "loT Devices Group" 416.

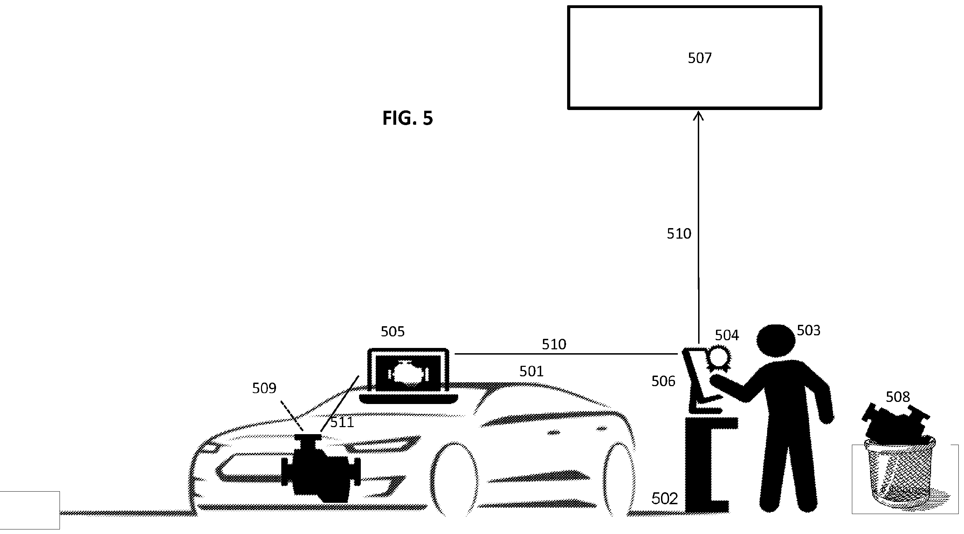

FIG. 5 shows a security system for maintenance of a product including loT devices, according to some embodiments of the disclosed invention. When bringing a product, for example, a car 501 to an automobile dealership 502 for maintenance, access to the internal loT devices of the car can be protected by the security capabilities that were previously installed in the car 501. For example, a mechanic 503 seeking access 510 would have to have appropriate credentials 504 to access the car's human-interface control unit 505 through an application on terminal device 506 that had previously been registered within a security ecosystem 507. The mechanic, the application or other acceptable identity would have to demonstrate proper authentication for this purpose. For example, one of them may be an authenticated member of a dealer maintenance group with privileges to access loT devices within the car with definable rights to conduct specified types of maintenance work on the car. For example the mechanic may determine that the engine control unit is defective and remove it (508) and then install a replacement (509). The mechanic would typically delete the defective engine control unit from the car's records within the security ecosystem 507 and replace it with a new engine control unit record. The replacement process would include appropriate inviter-invitee process between loT devices 511 (and possibly provisioning process, as described previously), and updating 510 of records for the car 501, to reflect the loT device replacement and its updated loT device group within the security ecosystem 507. The security ecosystem platform 507 includes one or more of a PKI, PMI and AA.

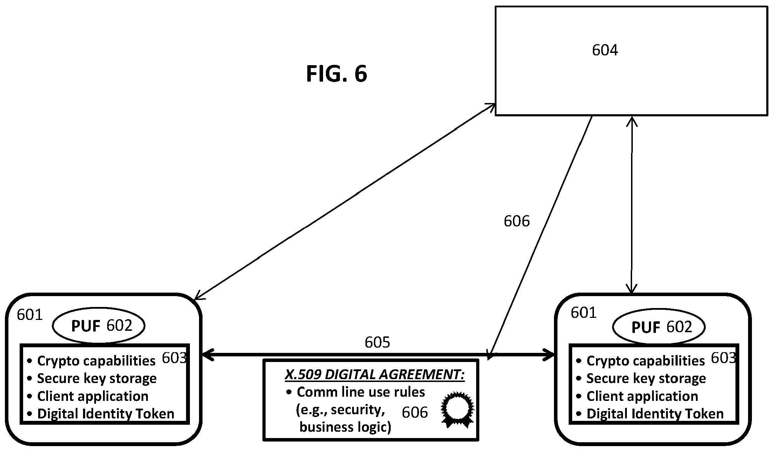

FIG. 6 depicts some elements of a secure and authenticated communication line, according to some embodiments of the disclosed invention. As shown, an loT endpoint 601 should typically have a secure root key provisioned as a method or establishing a unique identifier or cryptographic key on the device. One method of doing this is through the use of a PUF 602. Cryptographic algorithms, secure key storage and client application are provided on the device. A unique DIT is created on by the device 601 or may be provided by the security ecosystem 604. The security ecosystem 604 includes one or more of a PKI, PMI and AA. Through the application of an inviter-invitee process between two endpoints 601/601 and with facilitated support from an AA within the security ecosystem 604, those endpoints can establish a secure, authenticated communication line 605 between them. Typically, a communication line is accompanied by a digital agreement that may be recorded in a digital certificate attesting to the communication line and establishing terms (e.g., rules and/or business logic) of the use of the communication line established between the endpoints 606.

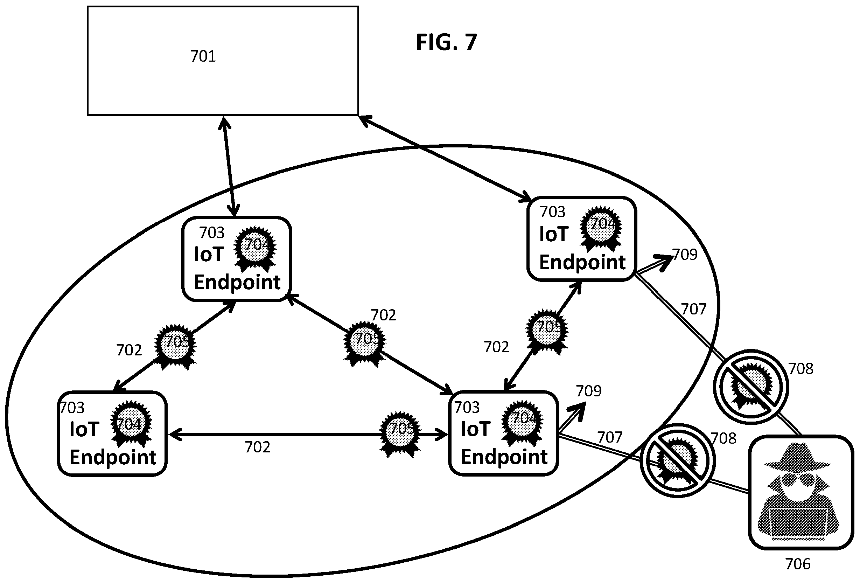

FIG. 7 illustrates some elements of a security ecosystem 701, according to some embodiments of the disclosed invention. One of the unique elements of the security ecosystem 701 is that the primary enabling security is based upon communication lines 702 between endpoints 703, not just the endpoints themselves. However, the security ecosystem 701 of the disclosed invention not only issues certificates 704 to endpoints 703, but it also issues certificates to each authenticated communication line 705 that pairs of endpoints may establish (have established) and use. By building relationships only upon individual communication lines with certificates, the endpoint communication lines thus established effectively could be considered to have become white-listed. The white-listing of device communication lines would typically be considered to enhance security. Rather than be centrally managed, communication lines are typically established at the endpoint level between pairs of endpoints. This allows authenticated endpoints to establish secure communication lines with authenticated other devices with which they need to communicate with in order to meet operational needs. Communications from an unknown endpoint 706 without secure communication lines 707 that have previously been authenticated and have an issued certificate 708 are prevented or ignored 709 (invitations from unknown endpoints to establish a secure communication are not ignored, however such invitations are managed by an AA which supports the authentication of both devices). This is an anti-spoofing result properly provisioned endpoints with secure communication lines talk only to previously authenticated endpoints and no others.

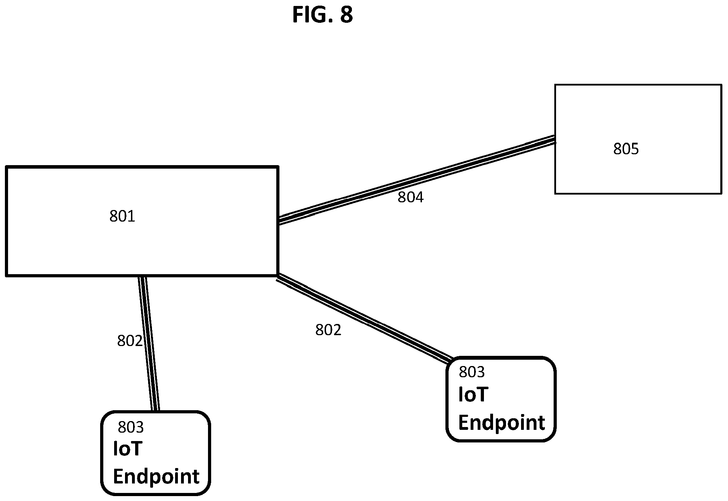

FIG. 8 shows an exemplary use of two application programming interfaces (APIs), according to some embodiments of the disclosed invention. In general terms an API is a set of clearly defined methods of communication between various software components. The security ecosystem may support two separate APIs. In some embodiments, an API 802 may be used by a client application on an loT endpoint 803 to access, control, utilize, etc., the capabilities of the security ecosystem 801. In some embodiments, an loT endpoint and the security ecosystem may communicate using other methods without an API. A second API 804 may be utilized by an external user, such as a user from an IT department, for multiple uses. One such use is to view the statuses of all or some of the devices (including loT devices as well as non-loT devices) secure communication lines, certificates, groups, relationships, etc. created, maintained and/or supported by the security ecosystem. Such an API may provide comprehensive, granular visibility to such information. Such information optionally could be used by an external system or user for a variety of analytics purposes. Optionally, the API may provide capabilities to direct all or a portion of the activities that the security ecosystem may conduct. In some embodiments, an external system operating under the direction of an artificial intelligence computer program can utilize this API.

In some embodiments, the disclosed invention may provide software/firmware updates uniquely for devices. For example, an image of the firmware (or a certificate associated with the firmware) is digitally signed by an established firmware signing authority recognized by a trusted public key being held, for example, by the LKSM of a secure component of the subject device to be updated. Using industry standard code signing technology, the firmware may be digitally signed using the private key of the code signing authority. The signed code is transmitted to the subject device. Upon receipt, the subject device first uses the trusted public key in its possession to verify that the code signing authority did, in fact, sign the code. Upon such verification, the subject device may complete a firmware update.

In some embodiments, a device digital record of the unique image of the device's firmware installation may be provided and the record may then be digitally signed by the device or an authority. If needed, at a later point in time, a new image can be created and compared to the previously created image to determine if the two images match. If they do not match, an attack or other problem with the device may be investigated or other action may be taken.

In some embodiments, audit trails are generated from actions such as inviter/invitee processing, provisioning, the establishment of groups together with other actions taken within the security ecosystem, based in part on digital signatures. Some embodiments provide an audit trail of the composite of the inviter and invitee processing.

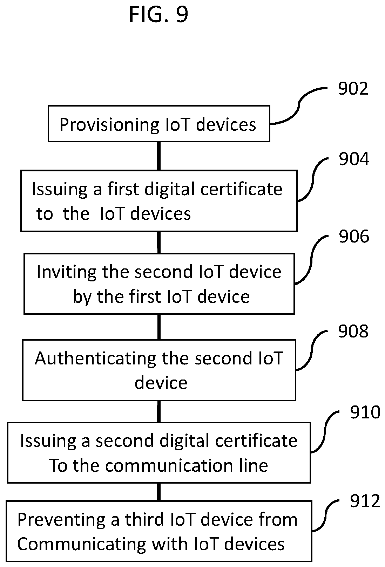

FIG. 9 is an exemplary process flow for establishing a secure communication between a plurality of loT devices, according to some embodiments of the disclosed invention. As shown in optional block 902, a first and a second loT devices may be provisioned by providing a unique identification, a digital identity token and a cryptographic key to and authenticating each of the first and second loT devices. As described above, the provisioning may be performed at the time of manufacturing a product that includes some loT devices, at the time of installing the loT device within the product, at the time of programming the product or the loT devices, or at any time before establishing the communication between the loT devices at issue. In either case, the IoT devices at issue would have a unique identification and a cryptographic key and are authenticated before they establish a secure communication line.

A first digital certificate is issued to the devices, for example, by a trusted third party, such as an attribute authority (AA), in block 904. In block 906, a first loT device invites a second loT device to establish a (unsecure) communication line with the first loT device by receiving a digital token from the second loT device. In block 908, the second loT device is authenticated to the first loT device using the unique identification, the digital identity token and cryptographic key of the second loT device, as described in detail throughout the present disclosure. In block 910, a secure communication line between the first loT device and the second loT device is established by authenticating the unsecured communication line using a second digital certificate provide to the communication line between the first loT device and the second loT device. This way, the security ecosystem of the disclosed invention not only issues (first) certificates to loT devices (endpoints), but it also issues (second) certificates to each authenticated communication line that pairs of loT devices (endpoints) have established and use.

In block 912, another (a third) loT device for which a secure communication line to the first or second loT device has not been established is prevented from communicating with the first or second loT device.

## Claims

1. A method for establishing a secure communication between a plurality of Internet of Things, IoT, devices, the method comprising:
provisioning a first and a second loT devices (902) by providing a unique identification, a digital identity token and a cryptographic key to and issuing a first digital certificate to each of the first and second loT devices (904);
inviting the second loT device by the first loT device to establish a communication line with the first loT device by receiving a digital identity token, DIT, from the second loT device (906), authenticating the second loT device using the unique identification, the digital identity token and the cryptographic key of the second loT device (908);
establishing a secure communication line between the first loT device and the second loT device by authenticating the established communication line and issuing a second digital certificate to the communication line between the first loT device and the second loT device (910); and
preventing a third loT device for which a secure communication line to the first or second loT device has not been established from communicating with the first or second loT device (912).

2. The method of claim 1, wherein the secure communication line includes a digital agreement establishing terms of use of the secure communication line between the first and second loT devices.

3. The method of claim 2, further comprising establishing secure communication lines between the first loT device, the second loT device and a plurality of more loT devices, each secure communication line including a digital agreement, and grouping the first loT device, the second loT device and the plurality of more loT devices into different groups based on a predetermined criteria.

4. The method of claim 3, further comprising including group membership and a plurality of associated rules in a respective certification for a respective secure communication line.

5. The method of any of the claims 1 to 4, wherein the first and second loT devices are components of an automobile, a medical device, a household appliance or an aircraft.

6. A system for establishing a secure communication between a plurality of Internet of Things, IoT, devices comprising:
a first IoT device including a first unique identification, a first digital identity token and a first cryptographic key; a second IoT device including a second unique identification, a second digital identity token and a second cryptographic key, wherein the second IoT device is configured to establish a communication line (707) with the first IoT device by receiving a digital identity token, DIT, from the first loT device, authenticating the first loT device using the first unique identification, the first digital identity token and the first cryptographic key of the first loT device; and
an attribute authority, AA, configured to provide a first digital certificate to the first loT and second devices, and configured to establish a secure communication line between the first loT device and the second loT device by authenticating an established communication line between the first loT device and the second IoT device,
wherein a third loT device for which a secure communication line to the first or second loT device has not been established is prevented from communicating with the first or second loT device.

7. The system of claim 6, wherein the secure communication line includes a digital agreement establishing terms of use of the secure communication line between the first and second loT devices.

8. The system of claim 7, wherein the attribute authority, AA, is further configured to establish secure communication lines between the first loT device, the second loT device and a plurality of more loT devices, each secure communication line including a digital agreement, and groups the first loT device, the second loT device and the plurality of more loT devices into different groups based on a predetermined criteria.

9. The system of any of claims 6 to 8, wherein the first and second loT devices are components of an automobile, a medical device, a household appliance or an aircraft.

## Patentansprüche

1. Verfahren zum Herstellen einer sicheren Kommunikation zwischen einer Vielzahl von Internet-der-Dinge- (Internet of Things, loT) Vorrichtungen, wobei das Verfahren Folgendes umfasst:
Bereitstellen einer ersten und einer zweiten loT-Vorrichtung (902) durch Bereitstellen einer eindeutigen Identifikation, eines digitalen Identitäts-Tokens und eines kryptographischen Schlüssels und Ausgeben eines ersten digitalen Zertifikats an jede der ersten und zweiten loT-Vorrichtung (904);
Auffordern der zweiten loT-Vorrichtung durch die erste loT-Vorrichtung, eine Kommunikationsverbindung mit der ersten loT-Vorrichtung herzustellen, indem ein digitales Identitäts-Token, DIT, von der zweiten loT-Vorrichtung empfangen wird (906), Authentifizieren der zweiten loT-Vorrichtung unter Verwendung der eindeutigen Identifikation, des digitalen Identitäts-Tokens und des kryptographischen Schlüssels der zweiten loT-Vorrichtung (908);
Herstellen einer sicheren Kommunikationsleitung zwischen der ersten loT-Vorrichtung und der zweiten loT-Vorrichtung durch Authentifizieren der hergestellten Kommunikationsleitung und Ausstellen eines zweiten digitalen Zertifikats für die Kommunikationsleitung zwischen der ersten loT-Vorrichtung und der zweiten loT-Vorrichtung (910); und
Verhindern, dass eine dritte loT-Vorrichtung, für die eine sichere Kommunikationsleitung zu der ersten oder zweiten loT-Vorrichtung nicht hergestellt wurde, mit der ersten oder zweiten loT-Vorrichtung kommuniziert (912).

2. Verfahren nach Anspruch 1, wobei die sichere Kommunikationsleitung eine digitale Vereinbarung umfasst, die Bedingungen für die Nutzung der sicheren Kommunikationsleitung zwischen der ersten und der zweiten loT-Vorrichtung festlegt.

3. Verfahren nach Anspruch 2, das ferner Folgendes umfasst: Herstellen von sicheren Kommunikationsleitungen zwischen der ersten loT-Vorrichtung, der zweiten loT-Vorrichtung und einer Vielzahl weiterer loT-Vorrichtungen, wobei jede sichere Kommunikationsleitung eine digitale Vereinbarung umfasst, und Gruppieren der ersten loT-Vorrichtung, der zweiten loT-Vorrichtung und der Vielzahl weiterer loT-Vorrichtungen in verschiedene Gruppen basierend auf einem vorbestimmten Kriterium.

4. Verfahren nach Anspruch 3, das ferner das Einbeziehen der Gruppenzugehörigkeit und einer Vielzahl von zugehörigen Regeln in eine jeweilige Zertifizierung für eine jeweilige sichere Kommunikationsleitung umfasst.

5. Verfahren nach einem der Ansprüche 1 bis 4, wobei die ersten und zweiten loT-Vorrichtungen Komponenten eines Automobils, einer medizinischen Vorrichtung, eines Haushaltsgeräts oder eines Flugzeugs sind.

6. System zum Herstellen einer sicheren Kommunikation zwischen einer Vielzahl von Internet-der-Dinge-, loT, Vorrichtungen, das Folgendes umfasst:
eine erste loT-Vorrichtung mit einer ersten eindeutigen Identifikation, einem ersten digitalen Identitäts-Token und einem ersten kryptographischen Schlüssel;
eine zweite loT-Vorrichtung mit einer zweiten eindeutigen Identifikation, einem zweiten digitalen Identitäts-Token und einem zweiten kryptografischen Schlüssel, wobei die zweite loT-Vorrichtung dafür konfiguriert ist, eine Kommunikationsverbindung (707) mit der ersten loT-Vorrichtung herzustellen, indem sie ein digitales Identitäts-Token, DIT, von der ersten loT-Vorrichtung empfängt, Authentifizieren der ersten loT-Vorrichtung unter Verwendung der ersten eindeutigen Identifikation, des ersten digitalen Identitäts-Tokens und des ersten kryptographischen Schlüssels der ersten loT-Vorrichtung; und
eine Attributautorität AA, die dafür konfiguriert ist, ein erstes digitales Zertifikat für die erste loT-Vorrichtung und die zweite Vorrichtung bereitzustellen, und die dafür konfiguriert ist, eine sichere Kommunikationsleitung zwischen der ersten loT-Vorrichtung und der zweiten loT-Vorrichtung herzustellen, indem sie eine hergestellte Kommunikationsleitung zwischen der ersten loT-Vorrichtung und der zweiten loT-Vorrichtung authentifiziert,
wobei eine dritte loT-Vorrichtung, für die eine sichere Kommunikationsleitung zu der ersten oder zweiten loT-Vorrichtung nicht hergestellt wurde, daran gehindert wird, mit der ersten oder zweiten loT-Vorrichtung zu kommunizieren.

7. System nach Anspruch 6, wobei die sichere Kommunikationsleitung eine digitale Vereinbarung umfasst, die Bedingungen für die Nutzung der sicheren Kommunikationsleitung zwischen der ersten und der zweiten loT-Vorrichtung festlegt.

8. System nach Anspruch 7, wobei die Attributautorität AA ferner dafür konfiguriert ist, sichere Kommunikationsleitungen zwischen der ersten loT-Vorrichtung, der zweiten loT-Vorrichtung und einer Vielzahl weiterer loT-Vorrichtungen herzustellen, wobei jede sichere Kommunikationsleitung eine digitale Vereinbarung umfasst und die erste loT-Vorrichtung, die zweite loT-Vorrichtung und die Vielzahl weiterer loT-Vorrichtungen auf der Grundlage eines vorbestimmten Kriteriums in verschiedene Gruppen einteilt.

9. System nach einem der Ansprüche 6 bis 8, wobei die ersten und zweiten loT-Vorrichtungen Komponenten eines Automobils, einer medizinischen Vorrichtung, eines Haushaltsgeräts oder eines Flugzeugs sind.

## Revendications

1. Procédé servant à établir une communication sécurisée entre une pluralité de dispositifs IdO (Internet of Things - Internet des Objets), le procédé comportant les étapes consistant à :
mettre en œuvre un premier et un deuxième dispositifs IdO (902) par la fourniture d'une identification unique, d'un jeton d'identité numérique et d'une clé cryptographique à chacun des premier et deuxième dispositifs IdO (904) et par l'émission d'un premier certificat numérique à chacun de ceux-ci ;
inviter le deuxième dispositif IdO par le premier dispositif IdO à établir une ligne de communication avec le premier dispositif IdO par la réception d'un DIT (digital identity token - jeton d'identité numérique) provenant du deuxième dispositif IdO (906), l'authentification du deuxième dispositif IdO à l'aide de l'identification unique, du jeton d'identité numérique et de la clé cryptographique du deuxième dispositif IdO (908) ;
établir une ligne de communication sécurisée entre le premier dispositif IdO et le deuxième dispositif IdO par l'authentification de la ligne de communication établie et l'émission d'un deuxième certificat numérique à la ligne de communication entre le premier dispositif IdO et le deuxième dispositif IdO (910) ; et
empêcher un troisième dispositif IdO, pour lequel une ligne de communication sécurisée vers le premier ou deuxième dispositif IdO n'a pas été établie, de communiquer avec le premier ou deuxième dispositif IdO (912).

2. Procédé selon la revendication 1, dans lequel la ligne de communication sécurisée comprend un contrat numérique établissant les conditions générales d'utilisation de la ligne de communication sécurisée entre les premier et deuxième dispositifs IdO.

3. Procédé selon la revendication 2, comportant par ailleurs l'étape consistant à établir des lignes de communication sécurisée entre le premier dispositif IdO, le deuxième dispositif IdO et une pluralité de plusieurs autres dispositifs IdO, chaque ligne de communication sécurisée comprenant un contrat numérique, et l'étape consistant à regrouper le premier dispositif IdO, le deuxième dispositif IdO et la pluralité de plusieurs autres dispositifs IdO en différents groupes en se basant sur un critère prédéterminé.

4. Procédé selon la revendication 3, comportant par ailleurs l'étape consistant à inclure une appartenance à un groupe et une pluralité de règles associées dans une certification respective pour une ligne de communication sécurisée respective.

5. Procédé selon l'une quelconque des revendications 1 à 4, dans lequel les premier et deuxième dispositifs IdO sont des composants d'une automobile, d'un dispositif médical, d'un appareil ménager ou d'un aéronef.

6. Système servant à établir une communication sécurisée entre une pluralité de dispositifs IdO (Internet of Things - Internet des Objets) comportant :
un premier dispositif IdO comprenant une première identification unique, un premier jeton d'identité numérique et une première clé cryptographique ;
un deuxième dispositif IdO comprenant une deuxième identification unique, un deuxième jeton d'identité numérique et une deuxième clé cryptographique,
dans lequel le deuxième dispositif IdO est configuré pour établir une ligne de communication (707) avec le premier dispositif IdO par la réception d'un DIT (digital identity token - jeton d'identité numérique) provenant du premier dispositif IdO, l'authentification du premier dispositif IdO à l'aide de la première identification unique, du premier jeton d'identité numérique et de la première clé cryptographique du premier dispositif IdO ; et
une AA (attribute authority - autorité d'attribut) configurée pour fournir un premier certificat numérique aux premier et deuxième dispositifs IdO et configurée pour établir une ligne de communication sécurisée entre le premier dispositif IdO et le deuxième dispositif IdO par l'authentification d'une ligne de communication établie entre le premier dispositif IdO et le deuxième dispositif IdO,
dans lequel un troisième dispositif IdO, pour lequel une ligne de communication sécurisée vers le premier ou deuxième dispositif IdO n'a pas été établie, est empêché de communiquer avec le premier ou deuxième dispositif IdO.

7. Système selon la revendication 6, dans lequel la ligne de communication sécurisée comprend un contrat numérique établissant les conditions générales d'utilisation de la ligne de communication sécurisée entre les premier et deuxième dispositifs IdO.

8. Système selon la revendication 7, dans lequel l'AA (attribute authority - autorité d'attribut) est par ailleurs configurée pour établir des lignes de communication sécurisée entre le premier dispositif IdO, le deuxième dispositif IdO et une pluralité de plusieurs autres dispositifs IdO, chaque ligne de communication sécurisée comprenant un contrat numérique, et regroupe le premier dispositif IdO, le deuxième dispositif IdO et la pluralité de plusieurs autres dispositifs IdO en différents groupes en se basant sur un critère prédéterminé.

9. Système selon l'une quelconque des revendications 6 à 8, dans lequel les premier et deuxième dispositifs IdO sont des composants d'une automobile, d'un dispositif médical, d'un appareil ménager ou d'un aéronef.
